**Europäisches Patentamt**

(19) **European Patent Office**

**Office européen des brevets**

(11) Numéro de publication: **0 078 227**
**A2**

(12) **DEMANDE DE BREVET EUROPEEN**

(21) Numéro de dépôt: **82401984.8**

(22) Date de dépôt: **26.10.82**

(51) Int. Cl.³: **H 04 N 9/07**

(30) Priorité: **28.10.81 FR 8120240**

(43) Date de publication de la demande:
**04.05.83 Bulletin 83/18**

(84) Etats contractants désignés:
**BE CH DE GB IT LI**

(71) Demandeur: **ELECTRICITE DE FRANCE Service National**
**2, rue Louis Murat**
**F-75008 Paris(FR)**

(72) Inventeur: **Perilhou, Jean Robert**
**19, rue Arnoux**
**F-92340 Bourg La Reine (Hauts de Seine)(FR)**

(74) Mandataire: **Bloch, Gérard et al,**
**39, avenue de Friedland**
**F-75008 Paris(FR)**

(54) **Système de prise de vues pour télévision en couleurs.**

㉝ Le système comporte une caméra principale à tube monochrome (1), un porte-filtres colorés (3), monté rotatif en synchronisme avec la fréquence trame entre un objectif (5) et la caméra (1).

Il est prévu des moyens (21, 31, 41; 22, 32, 42) pour mettre en mémoire les trames relatives à chacune des trois couleurs primaires et des moyens (24, 34, 44; 25, 35, 45; 26, 36, 46) pour restituer les trames pendant l'analyse des deux autres trames couleurs suivantes.

Le système est bien adapté pour la surveillance médicale ou industrielle et la télévision par reportage.

EP 0 078 227 A2

./...

FIG.3

## Système de prise de vues pour télévision en couleurs

La présente invention concerne un système de prise de vues pour télévision en couleurs comprenant une caméra principale à dispositif de prise de vues monochrome, un porte-filtres colorés monté rotatif derrière un objectif et devant la fenêtre du tube, et des moyens pour entraîner le porte-filtres en rotation en synchronisme avec la fréquence trame.

On utilise actuellement pour la télévision en couleurs principalement deux systèmes de prise de vues.

Le premier système comporte trois caméras principales. Il présente des avantages et des inconvénients. Comme avantage, on peut citer l'absence de papillotage. En effet, et au niveau de chacune des trois caméras, chaque couleur, bleu, rouge et vert, est bien répétée, dans le standard français par exemple, 50 fois par seconde. Mais l'inconvénient de ce système est qu'il nécessite un matériel de poids et de volume importants. Le deuxième système ne fait appel qu'à une seule caméra à tube spécial et ne provoque pas davantage de papillotage. Toutefois, ce deuxième système n'offre qu'une faible définition et l'absence de papillotage y est réalisée au prix d'une relative fragilité, d'un coût élevé et d'une mauvaise qualité des couleurs, à cause de la commutation par échantillonnage rapide.

La présente invention vise donc à offrir un système de prise de vues pour télévision en couleurs, sans effet de papillotage, à haute résolution, compatible avec les systèmes classiques noir et blanc et couleurs NTSC, SECAM et PAL, léger et d'un coût raisonnable, bref, un système palliant les inconvénients des deux autres systèmes utilisés actuellement.

La demanderesse a cherché à résoudre un tel problème avec une simple et unique caméra à dispositif monochrome ordinaire en noir et blanc, comme une ancienne réalisation, aujourd'hui abandonnée, l'a incitée à le faire.

Il s'agissait d'un système comportant un tube de prise de vues classique monochrome, un disque porte-filtres tournant en synchronisme avec le balayage trame pour présenter, devant la fenêtre du tube, un filtre rouge pendant la durée de balayage d'une trame, un filtre vert pendant la durée de balayage de la trame suivante, un filtre bleu pendant le balayage de la troisième trame, et ainsi de suite pour chaque cycle de trois trames consécutives. Bien entendu, il était prévu, de façon analogue, un autre disque porte-filtres tournant devant l'écran du tube oscilloscopique de visualisation. Le papillotage était évité par augmentation de la fréquence trame pour que les trois couleurs primaires rouge, vert, bleu, soient répétées, non pas $\frac{50}{3}$ fois par seconde (standard de 50 trames par seconde) mais un nombre de fois plus grand.

Toutefois, la conversion de la fréquence trame y est subordonnée à l'exploitation d'un dispositif encombrant et onéreux, qui de plus augmente la largeur de bande, encombre l'éther et rend le système incompatible avec le système monochrome en noir et blanc, et que la demanderesse a donc également cherché à éliminer.

A cet effet, la présente invention concerne un système de prise de vues pour télévision en couleurs comprenant une caméra principale à dispositif de prise de vues monochrome, un porte-filtres colorés monté rotatif derrière un objectif et devant la fenêtre du dispositif, et des moyens pour entraîner le porte-filtres en rotation en synchronisme avec la fréquence trame, caractérisé par le fait qu'il est prévu des moyens agencés pour mettre en mémoire les trames relatives à chacune des trois couleurs primaires et des moyens pour les restituer pendant l'analyse des deux autres trames couleurs suivantes.

Grâce à l'invention, avec par exemple un tube monochrome aussi simple que possible, on mémorise chacune des trames que l'on relit ensuite deux fois pendant la saisie des deux trames suivantes, donnant ainsi, au seul niveau du papillotage, un résultat équivalent à celui qu'on obtiendrait avec une fréquence trame trois fois plus grande, et sans pour autant présenter les inconvénients de la véritable conversion de fréquence trame.

L'invention sera mieux comprise à l'aide de la description suivante de plusieurs formes de réalisation du système de l'invention, en référence aux dessins annexés, sur lesquels :

- la figure 1 est une vue schématique d'une première forme de réalisation de la partie optique du système de prise de vues de l'invention.

- la figure 2 est une vue schématique d'une variante de réalisation de la partie optique du système de la figure 1.

- la figure 3 est un bloc-diagramme des moyens de mise en mémoire et de restitution des trames.

- la figure 4 est une représentation des signaux délivrés par le générateur du système de l'invention.

- la figure 5 est une représentation des luminosités, avec et sans correction, des moyens de mise en mémoire du système de l'invention.

- la figure 6 est une vue schématique d'une deuxième forme de réalisation de la partie optique du système de l'invention, et

- la figure 7 est un bloc-diagramme du générateur de signaux du système de l'invention.

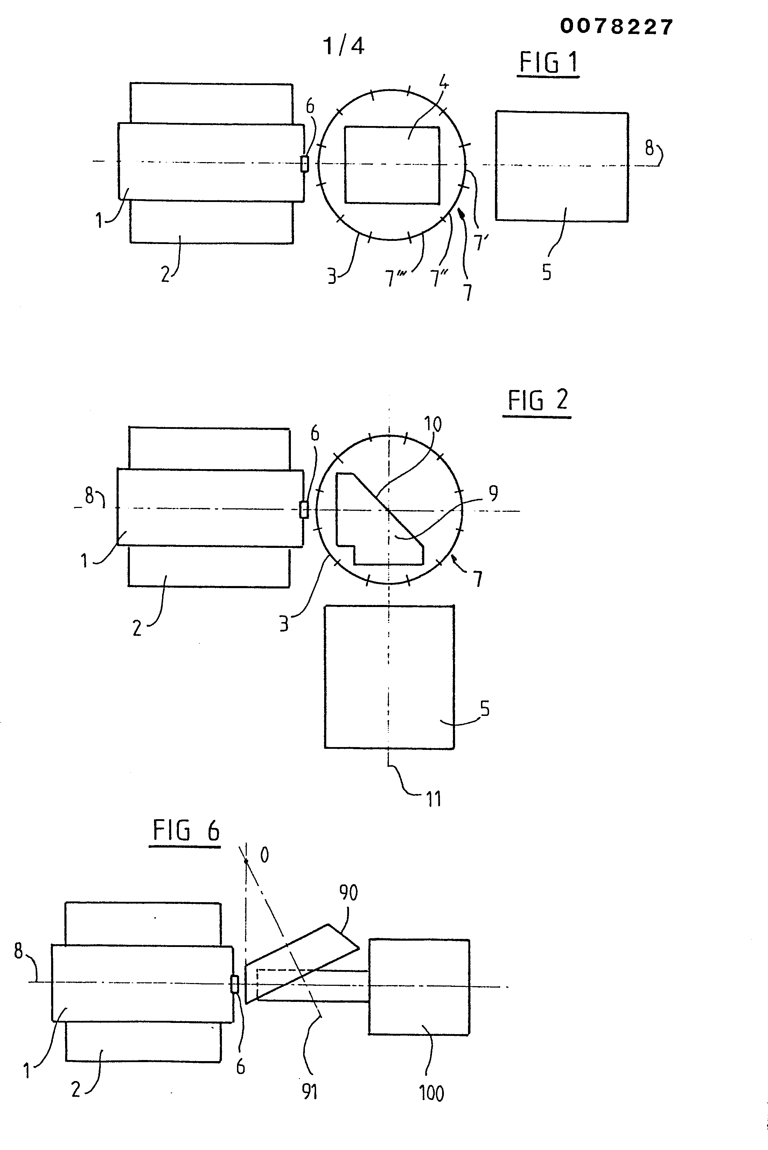

Tel que représenté sur la figure 1, le système de prise de vues pour télévision en couleurs de l'invention comprend une partie optique comprenant un tube de prise de vues 1, un dispositif de focalisation et déflexion 2, connu en soi, un tambour porte-filtres 3, un dispositif optique 4, à l'intérieur du tambour 3, et un objectif 5, devant lequel est disposé un objet, non représenté, à droite sur la figure 1, dont les vues sont à prendre.

Le tube 1 est un tube monochrome noir et blanc, dont la traînée d'image est courte, c'est-à-dire que l'analyse d'une image, ou mieux d'une trame, n'est pas influencée par les traces de la trame précédente par plus de quelques centièmes. On connaît, à cet égard, des tubes qui, après $\frac{1}{50}$ seconde, dans le standard européen à 50 trames par seconde, ou après $\frac{1}{60}$ seconde, dans le standard américain à 60 trames par seconde, ne gardent sur leur cible pas plus de 12 % des charges de la trame précédente. Il en résulte que les trames colorées successives rouges, vertes et bleues ne sont que très faiblement polluées les unes par les autres.

Le tambour 3 porte à sa périphérie une série de groupes 7 de trois filtres 7', 7", 7"' successifs, colorés respectivement en rouge, vert et bleu. Ces filtres, tous de même forme et de mêmes dimensions, sont pratiquement plats et rectangulaires, et leur dimension circonférentielle est sensiblement supérieure à l'ouverture du cadre 6 de la fenêtre du tube 1, pour tenir compte de la hauteur perdue par le retour du balayage trame. Une autre caractéristique du tambour 3 réside dans le fait que deux filtres de même couleur sont toujours diamétralement opposés pour une raison qui apparaîtra clairement ci-après.

L'objectif 5 donne de l'objet, sur sa partie arrière, à gauche sur la figure 1, une image de mêmes dimensions que l'ouverture 6 du tube 1. Et c'est le dispositif optique 4 qui transfère l'image de la partie arrière de l'objectif 5 à l'ouverture du tube 1, avec un grandissement égal à 1, et en la renversant pour tenir compte de la rotation du tambour. On comprend donc qu'il soit nécessaire que les deux filtres diamétralement opposés et disposés sur le tambour 3 aux intersections avec l'axe optique 8 du système soient de même couleur.

Dans le cas représenté sur la figure 1, le tambour 3 comporte quatre groupes de trois filtres rouge (R), vert (V) et bleu (B). Le tambour 3, de façon connue, est entraîné en rotation par un moteur synchrone, tournant en synchronisme avec la fréquence trame, soit 50 trames par seconde dans le standard européen. A chaque trame correspondant un filtre, le tambour 3 est entraîné à la vitesse de $\frac{50}{12}$ tours par seconde. La phase de cet entraînement est réglée pour que le pinceau durant son balayage vertical défile en même temps qu'un filtre et précède de peu le filtre suivant. De façon connue, cette mise en phase, qui conditionne la bonne position des filtres, peut être réalisée grâce à un signal impulsionnel produit, soit par une petite pièce magnétique solidaire du tambour 3 et passant devant une tête magnétique, soit par une fente optique ménagée dans le tambour 3 et passant entre une diode lumineuse et une photodiode.

Ainsi, le signal issu du tube de prise de vues 1 correspond, dans le standard à 50 trames par seconde, à une image rouge tous les cinquantièmes de seconde, puis à une image verte et à une image bleue, et ainsi de suite, avec une fréquence de répétition de chacune des trames couleurs de $\frac{50}{3}$ Hz.

L'agencement du tambour 3, avec quatre groupes de trois filtres, permet de remplacer le dispositif optique 4 de la figure 1 par le dispositif optique 9 de la figure 2, sur laquelle les mêmes éléments sont représentés avec les mêmes chiffres de référence, et de disposer l'objectif 5 avec son axe non plus dans le prolongement de celui du tube 1, mais perpendiculairement à celui-ci. Le dispositif 9 de transfert de l'image présente un chemin optique brisé suivant deux trajets perpendiculaires, grâce à un miroir 10 incliné à 45° sur l'axe 8 du tube 1 et sur l'axe 11 de l'optique 5.

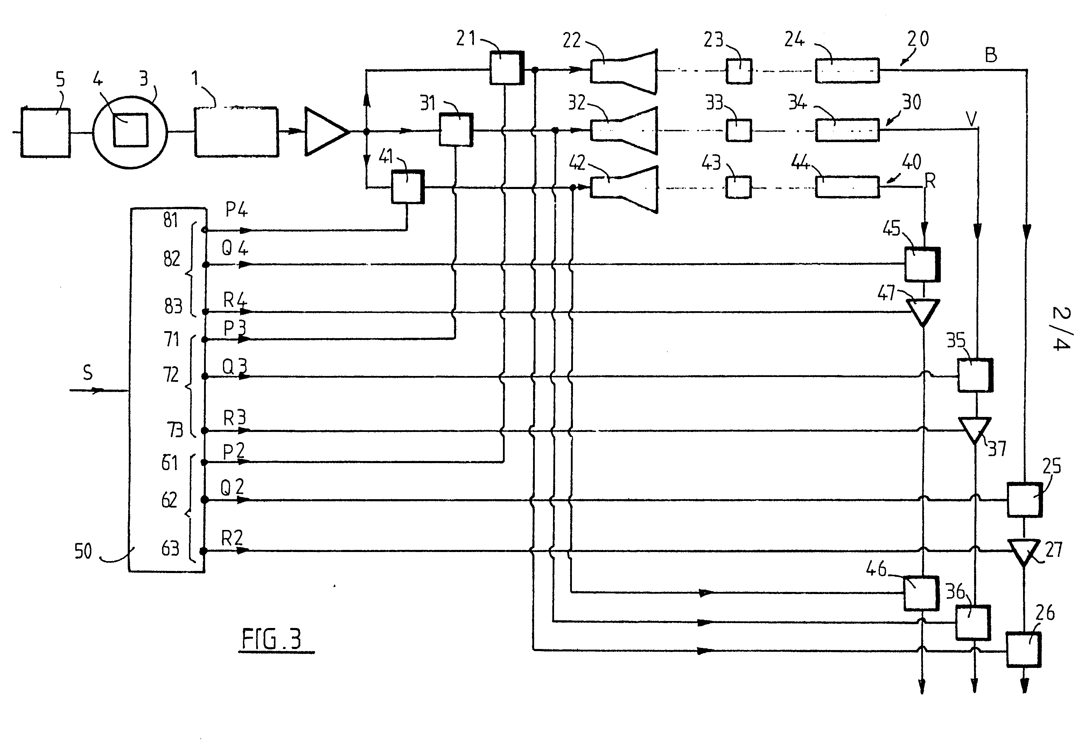

Vont maintenant être décrits les moyens de mise en mémoire et de restitution des trames couleurs, en référence à la figure 3.

Les moyens de mise en mémoire et de restitution des trames sont raccordés à la sortie de la caméra principale 1 et comprennent trois circuits identiques 20, 30 et 40, associés respectivement aux trois couleurs B, V et R, branchés en parallèle à la sortie de la caméra principale 1 pour en recevoir le signal vidéo de sortie et comportant chacun une porte vidéo ET de mise en mémoire (21; 31; 41), en l'espèce un transistor polarisé, un tube cathodique (22; 32; 42) raccordé à la sortie de la porte ET (21; 31; 41), un objectif (23; 33; 43), une caméra auxiliaire à tube monochrome (24; 34; 44) pour reprendre l'image du tube cathodique par l'intermédiaire de l'objectif, une porte vidéo ET de restitution (25; 35; 45) raccordée à la sortie de la caméra auxiliaire, et un additionneur (26; 36; 46) raccordé à la sortie de la porte vidéo (25; 35; 45). Il peut être prévu, comme dans l'exemple représenté sur la figure 3, entre la porte vidéo (25; 35; 45) et l'additionneur, un amplificateur à gain variable (27, 37, 47) dont il sera question ci-après.

Un générateur de signaux 50 commande les éléments des trois circuits 20, 30, 40 d'une manière qui sera également abordée plus loin.

Enfin, et de façon avantageuse, un amplificateur 60 est branché entre la caméra principale 1 et les trois circuits de mise en mémoire et de restitution de trames.

Les tubes cathodiques 22, 32, 42 sont des tubes à luminophore convenablement rémanents sur lesquels s'inscrivent respectivement les trois images colorées B, V, R prises séquentiellement par la caméra principale 1.

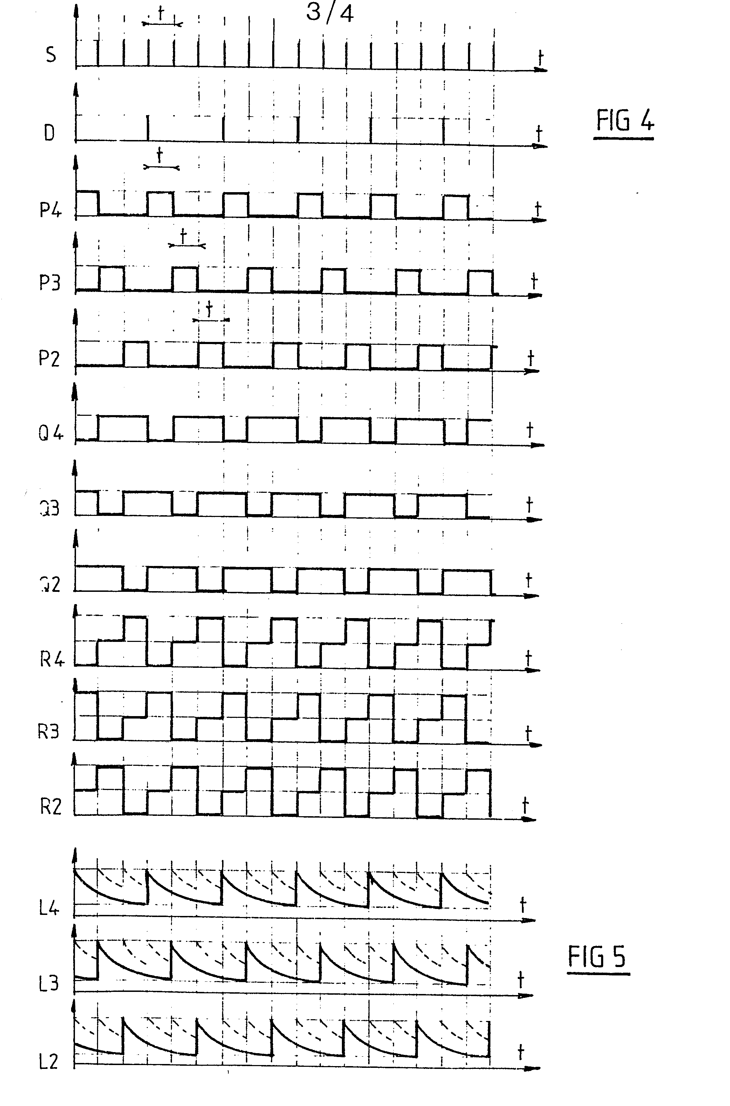

Les portes 21, 31, 41, qui reçoivent toutes les trois le train de toutes les images prises par la caméra 1, sont commandées par le générateur 50 pour ne laisser passer que les informations relatives à leurs couleurs respectives Bleu, Vert et Rouge. A cet effet, ces trois portes 21, 31, 41 sont respectivement raccordées aux sorties 61, 71 et 81 du générateur 50 par lesquelles sont fournis respectivement trois signaux rectangulaires $P_2$, $P_3$, $P_4$ identiques mais décalés dans le temps d'un intervalle de trame t (fig. 4). Les trois signaux $P_2$, $P_3$, $P_4$ comportent des impulsions rectangulaires d'une durée d'une trame espacées entre elles d'une durée de deux trames. Les portes vidéo 21, 31, 41 ne sont ainsi passantes, à tour de rôle et suivant l'ordre des couleurs du système, que pendant les périodes des trames de la couleur correspondante.

Les trois tubes cathodiques 22, 32, 42 sont ainsi alimentés par le signal vidéo de la caméra principale 1 respectivement par les trois portes 21, 31, 41. Les images des trois tubes sont reprises, grâce aux trois objectifs 23, 33, 43, respectivement par les trois caméras auxiliaires à tube monochrome 24, 34, 44, qui sont balayées en synchronisme avec la caméra principale 1 et son tambour porte-filtres 3.

Les portes vidéo 25, 35, 45 bloquent respectivement les signaux de la caméra auxiliaire associée (24; 34; 44) pendant que le tube cathodique associé (22; 32; 42) est illuminé, une trame sur trois. A cet effet, ces trois portes 25, 35, 45 sont respectivement raccordées aux sorties 62, 72 et 82 du générateur 50 par lesquelles sont fournis respectivement trois signaux rectangulaires $Q_2$, $Q_3$, $Q_4$, identiques mais décalés dans le temps d'une période trame t (fig. 4). Les trois signaux $Q_2$, $Q_3$, $Q_4$ comportent des impulsions rectangulaires d'une durée de deux trames espacées entre elles d'une durée d'une trame. Les signaux $Q_2$, $Q_3$, $Q_4$ sont les inverses des signaux $P_2$, $P_3$, $P_4$. Les portes vidéo 25, 35, 45 sont ainsi bloquées pendant que les portes vidéo 21, 31, 41 associées respectives sont passantes.

Les additionneurs 26, 36, 46 qui reçoivent respectivement les signaux des portes 25, 35, 45 sont également raccordés respectivement aux sorties des portes 21, 31, 41.

Ainsi, les additionneurs 26, 36, 46 délivrent à leurs sorties respectives trois signaux vidéo exclusivement de couleurs bleu, vert et rouge, respectivement, qui sont constitués, chacun, une trame sur trois, par le signal direct délivré par la caméra principale 1 à travers la porte (21; 31; 41) associée et, deux trames sur trois, par le signal de lecture délivré par la caméra auxiliaire (24; 34; 44) associée et repris du tube cathodique (22; 32; 42) associé. En d'autres termes, quand une trame d'une couleur considérée sort d'une des portes 21, 31, 41, elle est envoyée directement sur l'additionneur associé et sur le tube à luminophore associé, où elle est mise en mémoire, et la sortie de la caméra auxiliaire associée est bloquée. Ce n'est que pendant l'analyse des deux autres trames couleurs suivantes que cette caméra est débloquée pour restituer la trame considérée et l'envoyer sur l'additionneur.

Ce sont essentiellement ces tubes à écran lumineux rémanent qui constituent, avec les portes 21, 31, 41, les moyens de mise en mémoire des trames, les éléments en aval de ces tubes, dans chacun des trois circuits (20, 30, 40), constituant les moyens de restitution des trames.

Les trois voies B, V et R issues des trois additionneurs 26, 36, 46 peuvent ensuite être combinées dans un signal composite de type NTSC, PAL ou SECAM.

On a vu plus haut que les tubes 22, 32, 42 étaient convenablement rémanents. Toutefois, leur luminosité diminue inévitablement dans le temps. On a donc prévu les amplificateurs 27, 37, 47 à gain variable pour corriger cette diminution de luminosité. A cet effet, les trois amplificateurs 27, 37, 47 sont raccordés aux sorties 63, 73, 83 du générateur 50 par lesquelles sont fournis respectivement trois signaux $R_2$, $R_3$, $R_4$ en escalier, identiques mais décalés dans le temps d'une période trame t (fig. 4). Les trois signaux $R_2$, $R_3$, $R_4$ comportent, sur chaque période d'une durée de trois trames, successivement un premier palier au niveau zéro sur une durée d'une trame, un deuxième palier à un niveau moyen sur une durée d'une trame et un troisième palier à un niveau haut sur une durée d'une trame. Ainsi, grâce aux deux paliers des signaux $R_2$, $R_3$, $R_4$, le générateur peut, par paliers, augmenter le gain des amplificateurs 27, 37, 47 et donc pallier la diminution de luminosité des tubes cathodiques à luminophore 22, 32, 42, les paliers de niveau zéro correspondant aux intervalles où les portes de mise en mémoire 21, 31, 41 sont passantes et les portes de restitution 25, 35, 45 sont bloquées, et les paliers de niveaux moyen et haut aux intervalles où les portes de mise en mémoire 21, 31, 41 sont bloquées.

Bien entendu, les trois signaux $R_2$, $R_3$, $R_4$ pourraient tout aussi bien régler respectivement les gains des trois caméras auxiliaires 24, 34, 44, s'il s'agit de caméras à tube de prise de vues par exemple du type "Vidicon", dont le gain peut varier, en agissant sur leur tension de cible. Dans ce cas, les sorties 63, 73, 83 du générateur 50 seraient directement raccordées aux caméras 24, 34, 44 et les amplificateurs 27, 37, 47 n'auraient plus de raison d'être.

A cet endroit, il faut noter que les cibles des caméras 24, 34, 44 assurent également en partie la fonction de mise en mémoire des trames.

Dans un cas comme dans l'autre, on notera que si la luminosité de l'image des tubes cathodiques 22, 32, 42 est à l'origine forte, la troisième trame ne sera pas trop polluée par le bruit d'amplification dû à la lecture d'une image de l'écran des tubes en fin de rémanence.

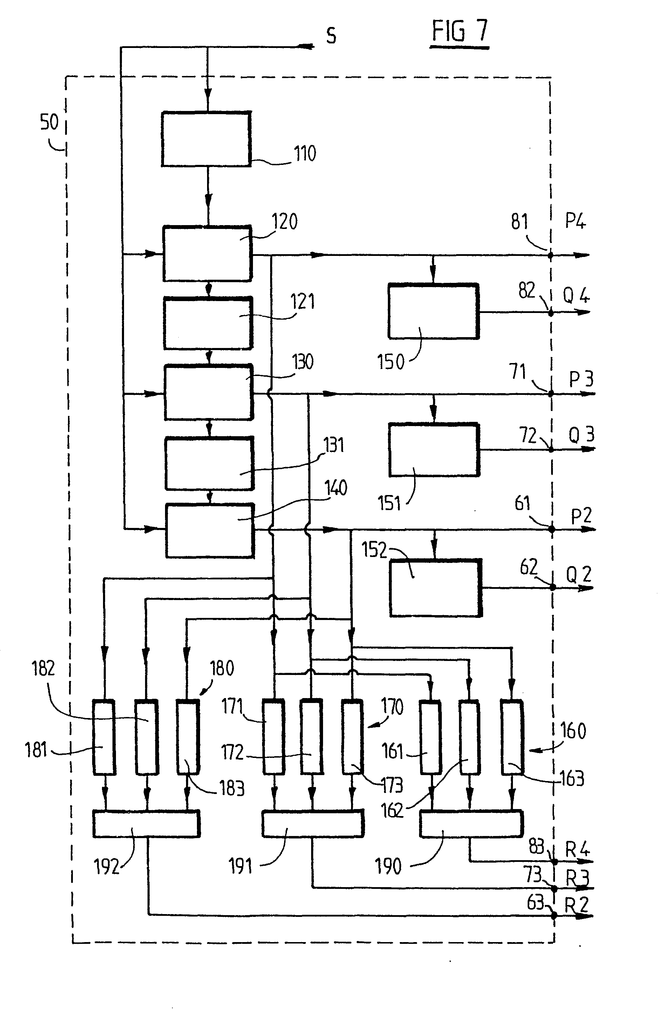

Sur la fig. 5, on a représenté en traits continus la variation dans le temps des luminosités $L_2$, $L_3$, $L_4$ des

luminophores 22, 32, 34. Les courbes en traits interrompus correspondent aux luminosités corrigées obtenues par augmentation des gains des caméras auxiliaires 24, 34, 44 ou des amplificateurs 27, 37, 47.

Le générateur de signaux 50 est représenté sur la fig. 7.

Il est piloté par le signal de synchronisation trame S de l'ensemble du système, qui attaque un diviseur 110 et trois bascules bistables 120, 130 et 140. Dans l'exemple représenté, il s'agit d'un diviseur par trois (fig. 4), mais l'invention n'est nullement limitée à un tel nombre. Le premier bistable 120 est connecté à la sortie du diviseur 110, délivrant un signal D (fig. 4), pour délivrer en 81 le signal $P_4$. Un premier élément dérivateur 121 est raccordé entre la sortie du premier bistable 120 et l'entrée du deuxième bistable 130 pour délivrer en 71 le signal $P_3$. Un deuxième élément dérivateur 131 est raccordé entre la sortie du deuxième bistable 130 et l'entrée du troisième bistable 140 pour délivrer en 61 le signal $P_2$.

Un premier inverseur 150 est raccordé à la sortie du premier bistable 120 pour délivrer en 82 le signal $Q_4$. Un deuxième inverseur 151 est raccordé à la sortie du deuxième bistable 130 pour délivrer en 72 le signal $Q_3$. Un troisième inverseur 152 est raccordé à la sortie du troisième bistable 140 pour délivrer en 62 le signal $Q_2$.

Trois groupes 160, 170 et 180 de trois éléments d'ajustage de niveau (161, 162, 163; 171, 172, 173; 181, 182, 183) sont raccordés en parallèle aux sorties des trois bistables 120, 130 et 140, les trois éléments d'un groupe étant respectivement raccordés aux sorties de ces trois bistables et à l'entrée de l'un des trois additionneurs 190, 191, 192, qui délivrent respectivement en 83, 73 et 63 les

trois signaux $R_4$, $R_3$ et $R_2$.

On a décrit ci-dessus une forme de réalisation du système de l'invention, dans laquelle les moyens de mise en mémoire des trames comprennent des tubes à luminophore. L'invention n'exclut pas pour autant d'autres types de moyens de mise en mémoire, comme par exemple des mémoires numériques ou des mosaïques à semi-conducteurs.

Dans la forme de réalisation décrite ci-dessus, le porte-filtres est constitué par un tambour cylindrique monté rotatif autour de son axe, orthogonal à celui de la caméra principale 1. Dans une variante de réalisation représentée sur la figure 6, le porte-filtres est constitué par un tambour tronconique 90, d'axe 91, incliné sur l'axe 8 de la caméra principale 1, dans le plan de la figure. Les filtres colorés, dans le même ordre que sur le tambour 3, sont toujours disposés à la périphérie du tambour. L'intérêt d'une telle réalisation est double. Tout d'abord, le transfert de l'image de la partie arrière de l'objectif 100 à l'ouverture 6 du tube 1 n'est plus nécessaire et, en éliminant le dispositif optique 4 ou 9 des figures 1 et 2, on peut rapprocher au maximum l'objectif 100 du tube 1, jusqu'à proximité de la paroi du tambour 90 portant le filtre disposé en face de l'ouverture du tube 1. La partie optique du système de l'invention est donc, dans cette réalisation, plus compacte.

En second lieu, ce tambour tronconique donne le même résultat qu'un disque plan, d'axe parallèle à celui du tube 1, et dont le diamètre serait relativement très grand, avec un centre, en 0 sur la figure 6, pratiquement hors de la partie optique du système de l'invention. Comme une telle solution, c'est-à-dire celle utilisant un grand disque porte-filtres, n'est pas réaliste, c'est avec la

13

**0078227**

solution faisant appel à un disque de dimension raisonnable, et donc forcément petit, qu'il faut comparer
la solution de l'invention. Avec un petit disque, les
filtres ne peuvent qu'être triangulaires. Dans le cas
décrit ci-dessus, avec le tambour tronconique ou son
disque équivalent, les filtres sont quasi-rectangulaires,
comme dans le cas du tambour cylindrique 3, ce qui bien
entendu est avantageux.

Enfin, dans la forme de réalisation décrite ci-dessus, le
dispositif de prise de vues monochrome de la caméra principale est constitué par un tube. Dans une variante de
réalisation, ce dispositif pourrait être constitué par
une mosaïque de détecteurs analysés par des circuits du
type à transfert de charges, ou, dans la terminologie
anglaise communément employée, CCD (charged coupled device).

Le système de l'invention est parfaitement bien adapté
pour la télévision par reportage et la surveillance industrielle ou médicale.

Revendications

1. Système de prise de vues pour télévision en couleurs, comprenant une caméra principale à dispositif de prise de vues monochrome (1), un porte-filtres colorés (3, 90) monté rotatif derrière un objectif (5, 100) et devant la fenêtre (6) du dispositif (1), et des moyens pour entraîner le porte-filtres en rotation en synchronisme avec la fréquence trame, caractérisé par le fait qu'il est prévu des moyens (21, 31, 41; 22, 32, 42) agencés pour mettre en mémoire les trames relatives à chacune des trois couleurs primaires et des moyens (24, 34, 44; 25, 35, 45; 26, 36, 46) pour les restituer pendant l'analyse des deux autres trames couleurs suivantes.

2. Système selon la revendication 1, dans lequel les moyens de mise en mémoire des trames comportent trois portes vidéo (21, 31, 41) raccordées à la sortie de la caméra (1) et agencées pour être passantes chacune à tour de rôle pendant un intervalle de trame.

3. Système selon la revendication 2, dans lequel les moyens de mise en mémoire des trames comportent trois tubes à écran lumineux rémanent (22, 32, 42) respectivement raccordés aux sorties des trois portes (21, 31, 41).

4. Système selon la revendication 3, dans lequel les moyens de restitution des trames comportent trois caméras auxiliaires, à tube monochrome (24, 34, 44), associées respectivement aux trois tubes à écran rémanent (22, 32, 42) et trois portes (25, 35, 45) raccordées respectivement aux sorties des trois caméras auxiliaires et agencées pour être respectivement bloquées pendant que les portes de mise en mémoire associées (21, 31, 41) sont respectivement passantes.

**0078227**

5. Système selon la revendication 4, dans lequel les moyens de restitution des trames comprennent trois additionneurs (26, 36, 46) raccordés respectivement aux sorties des trois portes de restitution (25, 35, 45) et aux sorties des trois portes de mise en mémoire (21, 31, 41).

6. Système selon la revendication 3, dans lequel sont prévus des moyens (27, 37, 47) pour amplifier la luminosité des écrans lumineux rémanents respectivement pendant les intervalles où les portes de mise en mémoire (21, 31, 41) sont bloquées.

7. Système selon la revendication 6, dans lequel est prévu un générateur de signaux (50) piloté par le signal de synchronisation trame pour commander les portes de mise en mémoire (21, 31, 41), les portes de restitution (25, 35, 45) et les moyens d'amplification (27, 37, 47).

8. Système selon la revendication 1, dans lequel le porte-filtres est un tambour cylindrique (3) monté rotatif autour de son axe orthogonal à celui de la caméra principale (1).

9. Système selon la revendication 8, dans lequel l'axe (11) de l'objectif (5) est perpendiculaire à celui (8) de la caméra principale (1).

10. Système selon la revendication 1, dans lequel le porte-filtres est un tambour tronconique (90) monté rotatif autour de son axe (91) incliné sur celui (8) de la caméra principale (1).

**0078227**

1/4

FIG 1

FIG 2

FIG 6

FIG.3

0078227

**0078227**

3/4

FIG 4

FIG 5

FIG 7